# EUROPÄISCHE PATENTSCHRIFT

(11) **EP 4 326 947 B1**
(45) Veröffentlichungstag und Bekanntmachung des Hinweises auf die Patenterteilung: **14.05.2025**
(21) Anmeldenummer: 22718145.0
(22) Anmeldetag: 24.03.2022
(51) Int. Cl.: E02F 9/20, E02F 9/22, F16D 48/06

(54) **VERFAHREN ZUM BESTIMMEN EINES STEUERUNGSABLAUFS EINES ANTRIEBSSTRANGS**
METHOD FOR DETERMINING A CONTROL SEQUENCE OF A DRIVE TRAIN
PROCÉDÉ DE DÉTERMINATION D'UNE SÉQUENCE DE COMMANDES D'UNE CHAÎNE CINÉMATIQUE

(30) Priorität: 20.04.2021 DE 102021203899
(43) Veröffentlichungstag der Anmeldung: 28.02.2024
(73) Patentinhaber: ZF Friedrichshafen AG, 88046 Friedrichshafen (DE)
(72) Erfinder: HELLER, Carolin, 88147 Achberg (DE); HEINZLER, Andreas, 88212 Ravensburg (DE); PILZWEGER, Hans, 94152 Neuhaus am Inn (DE); EBERTSEDER, Thomas, 94060 Pocking (DE)
(74) Vertreter: ZF Friedrichshafen AG
(86) Internationale Anmeldenummer: PCT/EP2022/057782
(87) Internationale Veröffentlichungsnummer: WO 2022/223233

(56) Entgegenhaltungen:
- EP-A1- 2 514 987
- WO-A1-2005/078304
- DE-A1- 102005 019 790
- DE-A1- 102017 222 111

## Beschreibung

### Technisches Gebiet

Das technische Gebiet betrifft ein Verfahren zum Bestimmen eines Steuerungsablaufs eines Antriebsstrangs einer Arbeitsmaschine, wobei mit dem Steuerungsablauf eine Kupplung des Antriebsstrangs in Abhängigkeit von einer Bremsbetätigung gesteuert wird. Zudem betrifft das technische Gebiet eine Arbeitsmaschine mit einem Antriebsstrang.

### Stand der Technik

Die DE 10 2017 222 111 A1 beschreibt ein Verfahren zum Kalibrieren eines Kennfelds eines Antriebsstrangs einer Arbeitsmaschine. Eine Fahrantriebskupplung wird gemäß dem Kennfeld in Abhängigkeit von einer Betätigung eines Bremspedals gesteuert. Ein Öffnungspunkt und/oder ein Schließpunkt der Fahrantriebskupplung wird derart angepasst, dass die Abweichung eines Ist-Drehzahlverlaufs von einem Soll-Drehzahlverlauf minimiert wird.

Die EP 2 514 987 beschreibt eine Kupplungssteuerung, welche die Kupplung in Abhängigkeit von einer detektierten Geschwindigkeit eines Getriebes steuert.

Die WO 2005/078304 A1 beschreibt ein Verfahren zur Steuerung von Funktionen eines Mobilfahrzeugs mit einer Antriebsmaschine, welche mit einem Verbraucher und über eine Kupplungsvorrichtung mit den Antriebsrädern in Verbindung steht

### Darstellung der Erfindung

Ein erster Aspekt betrifft ein Verfahren zum Bestimmen eines Steuerungsablaufs eines Antriebsstrangs einer Arbeitsmaschine. Mit dem Steuerungsablauf wird eine Kupplung des Antriebsstrangs in Abhängigkeit von einer Bremsbetätigung gesteuert. Durch den Steuerungsablauf kann es für den Fahrer der Arbeitsmaschine beispielsweise nur noch notwendig sein, die Bremse der Arbeitsmaschine zu betätigen, während die Kupplung in angemessener Weise automatisch betätigt wird. Dadurch ist die Steuerung der Arbeitsmaschine einfach und komfortabel. Beispielsweise muss zum Anhalten und Anfahren durch den Fahrer nur noch ein Bremspedal gedrückt oder gelöst werden und gegebenenfalls ein Fahrpedal, nicht mehr jedoch ein Kupplungspedal.

Die Arbeitsmaschine kann beispielsweise als eine Landmaschine oder eine Baumaschine ausgebildet sein. Die Arbeitsmaschine kann als Fahrzeug ausgebildet sein. Der Antriebsstrang kann dazu ausgebildet sein, Leistung in der Arbeitsmaschine zu generieren und bis auf den Boden zu übertragen. Der Antriebsstrang kann einen Motor aufweisen. Der Antriebsstrang kann eine Antriebskraft zum Fortbewegen der Arbeitsmaschine bereitstellen. Der Antriebsstrang kann auch Leistung für ein Werkzeug oder Anbaugeräte bereitstellen, beispielsweise an einer Zapfwelle. Die Kupplung kann beispielsweise als eine Anfahrkupplung ausgebildet sein. Beispielsweise kann der Motor mit einem Abtrieb des Antriebsstrangs mittels der Kupplung wirkverbindbar sein. Beispielsweise kann der Antriebsstrang auch statt einer Anfahrkupplung eine oder mehrere Kupplungen in einem Getriebe aufweisen, mittels welchen eine Drehmomentübertragung von dem Motor an den Abtrieb unterbrechbar ist, wobei alle für diese Unterbrechung notwendigen Kupplungen mit dem Steuerungsablauf in Abhängigkeit von der Bremsbetätigung gesteuert werden. Die eine oder mehreren Kupplungen können beispielsweise erlauben, einen Leerlauf bei dem Antriebsstrang einzulegen. Eine Kupplung kann beispielsweise als reibschlüssige Kupplung, wie eine Lamellenkupplung, ausgebildet sein. Durch das Steuern der Kupplung kann diese betätigt werden. Die Kupplungsbetätigung kann ein Öffnen oder Schließen jeweiliger Kupplung sein. Die Kupplungsbetätigung kann ein Verändern eines Betätigungsdrucks jeweiliger Kupplung sein. Die Bremse kann beispielsweise eine Verzögerung jeweiliger angetriebener Räder der Arbeitsmaschine bewirken. Die Bremse kann beispielsweise als Scheibenbremse oder Trommelbremse ausgebildet sein. Die Bremsbetätigung kann ein Öffnen oder Schließen der Bremse sein. Die Bremsbetätigung kann ein teilweises Schließen der Bremse sein, womit nur ein Teil einer maximalen Bremskraft bereitgestellt wird. Die Kupplungsbetätigung kann entsprechend nur ein teilweises Schließen sein, womit die Kupplung schleift und eine Drehzahl jeweiliger durch die Kupplung verbindbarer Teile nur teilweise angeglichen wird. Die Bremsbetätigung kann ein Verändern eines Betätigungsdrucks jeweiliger Bremsen sein.

Durch den Steuerungsablauf kann die Kupplung selbsttätig in Abhängigkeit von der Bremsbetätigung erfolgen. Ein Bremspedal kann so eine doppelte Funktion haben. Durch ein Drücken des Bremspedals kann sowohl die Bremse als auch die Kupplung betätigt werden. Dagegen werden sonst sowohl die Kupplung als auch die Bremse durch den Fahrer der Arbeitsmaschine manuell betätigt.

Der Fahrer steuert die Kupplung manuell normalerweise so, dass die Fahrt komfortabel ist. Beispielsweise soll die Kupplung beim Anfahren nicht schlagartig zugehen, wodurch ein unkomfortabler Ruck entstehen könnte. Die Kupplungsbetätigung soll sicher sein. Beim Rückwärtsfahren könnte ein schlagartiges Zufahren der Kupplung einen Satz der Arbeitsmaschine bedingen, wodurch Personen im Umfeld umgefahren werden könnten. Zudem soll die Arbeitsmaschine in verschiedenen Fahrzeugkonfigurationen, beispielsweise mit und ohne Anhänger und unterschiedlicher Beladung, und bei verschiedenen Fahrwiderständen, zum Beispiel aufgrund einer Untergrundbeschaffenheit und einer Neigung, nicht zurückrollen. Eine unnötig hohe Belastung jeweiliger Komponenten der Arbeitsmaschine, wie deren Kupplung, soll vermieden werden. Zudem soll das Fahrzeug nicht verzögert losfahren. Dies kann beispielsweise vorkommen, wenn die Bremse noch nicht ausreichend gelöst ist, wenn von der Kupplung bereits ein starkes Drehmoment an den Abtrieb übertragen wird. Dadurch kann zudem eine hohe Reibleistung im Antriebsstrang entstehen. Entsprechend kann die Kupplung schnell überlastet werden. Eine entsprechende dimensionierte Kupplung ist dagegen unnötig groß, schwer und teuer. Eine entsprechende Modulierung einer Kupplungskennlinie mittels einer physikalischen Formel ist aufwendig und kompliziert zu bestimmen.

Ein Fahrer der Arbeitsmaschine kann, ausreichende Fahrerfahrung vorausgesetzt, allen vorstehend genannten Kriterien Rechnung tragen und die Bremse und die Kupplung intuitiv angemessen betätigen. Die hierfür erforderliche Aufmerksamkeit ist jedoch groß, wodurch sich der Fahrer nicht auf andere Aufgaben konzentrieren kann. Zudem können Fehlbedienung schnell zu Beschädigungen führen. Deswegen soll lediglich die Bedienung der Bremse notwendig sein und die Kupplung mit dem Steuerungsablauf angemessen bedient werden. Dem Verfahren liegt dabei der Gedanke zugrunde, dass der Steuerungsablauf durch Imitierung der Bedienung durch einen Fahrer eine angemessene selbsttätige Kupplungssteuerung in Abhängigkeit von der Bremsbetätigung bereitstellen kann.

Das Verfahren weist einen Schritt eines Rangierens mit der Arbeitsmaschine durch einen Bediener auf. Der Bediener kann ein erfahrener Fahrer sein. Das Rangieren kann ein einfaches oder mehrfaches Anfahren und alternativ oder zusätzlich ein einfaches oder mehrfaches Anhalten mit der Arbeitsmaschine aufweisen. Das Rangieren kann beispielsweise ein Fahren auf einer flachen Ebene ohne Verkehr und Ablenkung sein. Somit können Rahmenbedingungen bereitgestellt werden, bei welchen der Bediener die Kupplung und die Bremse optimal aufeinander abgestimmt betätigen kann. Durch ein manuelles Rangieren durch den Bediener kann der Steuerungsablauf auf der Basis experimenteller Daten bestimmt werden.

Das Verfahren weist einen Schritt eines Erfassens jeweiliger Kupplungsbetätigungskenngrößen jeweiliger Kupplungsbetätigungen und jeweiliger Bremsbetätigungskenngrößen jeweiliger Bremsbetätigungen während des Rangierens auf. Die Kupplungsbetätigungskenngrößen können ein Maß für die Betätigung der Kupplung sein. Die Kupplungsbetätigungskenngrößen können beispielsweise zu einem Betätigungsdruck der Kupplung korrespondieren oder diesem entsprechen. Beispielsweise kann die Kupplungsbetätigungskenngröße ein Grad der Betätigung sein und alternativ oder zusätzlich eine Geschwindigkeit der Betätigung sein. Die Bremsbetätigungskenngrößen können ein Maß für die Betätigung der Bremse sein. Die Bremsbetätigungskenngrößen können beispielsweise zu einem Betätigungsdruck der Bremse korrespondieren oder diesem entsprechen. Beispielsweise kann die Bremsbetätigungskenngröße ein Grad der Betätigung sein und alternativ oder zusätzlich eine Geschwindigkeit der Betätigung sein. Die jeweiligen Kenngrößen können beispielsweise durch einen oder mehrere Sensoren erfasst werden. Beispielsweise kann ein Winkelmesser oder ein Wegmesser eine Betätigung eines Bremspedals oder eines Kupplungspedals messen. Beispielsweise kann ein Drucksensor einen Betätigungsdruck an der Bremse oder der Kupplung messen. Durch das Erfassen können experimentelle Daten einer manuellen Fahrzeugbedienung erfasst werden.

Das Verfahren kann einen Schritt eines Bestimmens wenigstens einer Kupplungssteuerkennlinie in Abhängigkeit von den erfassten Kupplungsbetätigungskenngrößen und erfassten Bremsbetätigungskenngrößen aufweisen. Die Kupplungssteuerkennlinie kann eine Funktion abbilden, mit welcher eine korrespondierende Kupplungsbetätigung in Abhängigkeit von der Bremsbetätigung bestimmt werden kann. Die Kupplungssteuerkennlinie kann eine Kennlinie eines Kupplungskennlinienfelds sein. Der Schritt des Bestimmens kann auch mehrere Kupplungssteuerkennlinien bestimmen. Sofern mehrere Kupplungssteuerkennlinien bestimmt werden, können die Erläuterungen im Folgenden für alle Kupplungssteuerkennlinien und der Bestimmung gelten, sofern anwendbar.

Mittels der jeweiligen Kupplungssteuerkennlinie kann durch den Steuerungsablauf eine Kupplungsbetätigung in Abhängigkeit von einer Bremsbetätigung eines Bedieners selbsttätig gesteuert wird. Die Kupplungssteuerkennlinie kann beispielsweise genutzt werden, um eine Steuerungsvorrichtung der Kupplung zu bedaten. Die Kupplungssteuerkennlinie kann beispielsweise nur für die Arbeitsmaschine genutzt werden, welches auch beim Rangieren zum Erzeugen der zugrundeliegenden Daten genutzt wurde. Die Kupplungssteuerkennlinie kann beispielsweise auch für alle Arbeitsmaschinen einer Serie gleichermaßen genutzt werden. Beispielsweise können die Daten zum Bestimmen der Kupplungssteuerkennlinie mit einem Prototyp erzeugt werden und die Kupplungssteuerkennlinie bei den Serienfahrzeugen hinterlegt werden. Es kann aber auch jede Arbeitsmaschine vor Auslieferung oder durch den Endkunden selbst für das Verfahren genutzt werden, um den Steuerungsablauf für jede individuelle Arbeitsmaschine zu bestimmen. Damit können dann auch in jeder Arbeitsmaschine die Benutzervorlieben des jeweiligen Bedieners berücksichtigt werden.

In einer Ausführungsform des Verfahrens ist es vorgesehen, dass der Schritt des Bestimmens der Kupplungssteuerkennlinie eine Mittelung jeweiliger erfasster Kupplungsbetätigungskenngrößen und jeweiliger erfasster Bremsbetätigungskenngrößen bei einer Vielzahl von Rangiervorgängen aufweist. Es können beispielsweise mehrfach die gleichen Rangiermanöver durchgeführt werden. Ein Rangiervorgang kann ein vorgegebenes Rangieren sein, wie beispielsweise ein Anfahren, beschleunigen auf eine vorgegebene Geschwindigkeit und ein Anhalten. Durch mehrere Rangiermanöver können Auslieger, beispielsweise durch Fehlbedienungen beim Rangieren, keinen oder nur einen geringen Einfluss auf den durch das Verfahren bestimmten Steuerungsablauf haben. Die Mittelung kann beispielsweise ein Durchschnitt sein. Es können aber auch andere Mittelungen angewandt werden, wie ein arithmetischer Mittelwert, ein geometrischer Mittelwert und ein harmonischer Mittelwert. Beispielsweise können jeweilige einem bestimmten Bremsbetätigungskennwert zugeordnete Kupplungsbetätigungskennwerte mehrerer Rangiervorgänge gemittelt werden oder auch für jeden Rangiervorgang jeweils eine zugeordnete Kupplungssteuerkennlinie bestimmt werden und die Kupplungssteuerkennlinien durch deren Mittelung bestimmt werden.

In einer Ausführungsform des Verfahrens ist es vorgesehen, dass wenigstens eine erste Kupplungssteuerkennlinie bei einer ersten Auswahl jeweiliger erfasster Kupplungsbetätigungen und jeweiliger erfasster Bremsbetätigungen durch den Bediener bestimmt wird. Zudem kann wenigstens eine zweite Kupplungssteuerkennlinie bei einer zu der ersten Auswahl verschiedenen zweiten Auswahl jeweiliger erfasster Kupplungsbetätigungen und jeweiliger erfasster Bremsbetätigungen durch den Bediener bestimmt werden. Die Auswahl kann beispielsweise in Abhängigkeit von der Art des Manövers, einem Lastzustand oder von anderen Rahmenbedingungen erfolgen. Die Auswahl kann beispielsweise auch danach erfolgen, wie dicht jeweilige Messwerte zusammen liegen. Die verschiedenen Datensets können beispielsweise gruppiert werden. Dadurch können mehrere Kupplungssteuerkennlinien bestimmt werden, welche eine situationsgerechte automatische Kupplungssteuerung in Abhängigkeit von der Bremsbetätigung erlauben. Beispielsweise kann die entsprechende der Kupplungssteuerkennlinien automatisch oder durch Bedienerauswahl gewählt werden. Die Kupplungsbetätigung kann mittels der jeweiligen ausgewählten der ersten und der zweiten Kupplungssteuerkennlinie in Abhängigkeit von einer Bremsbetätigung eines Bedieners bei dem Steuerungsablauf selbsttätig gesteuert werden.

In einer Ausführungsform des Verfahrens ist es vorgesehen, dass für die Kupplungssteuerkennlinie ein erster Bremsbetätigungsbereich bestimmt wird, bei welchem die Bremsbetätigung zu keiner Kupplungsbetätigung führt. Beispielsweise kann es einen Leerweg des Bremspedals geben, bei welcher ein Betätigungsdruck der Kupplung nicht verändert wird. So kann ein übermäßig frühes Ansprechen der Kupplung bei der Bremsbetätigung vermieden werden. Es kann also eine obere oder untere Grenze geben, bei welcher eine weitere Veränderung der Bremskraft keine Veränderung der Kupplungsbetätigungskraft mehr bewirkt. Ein Bremsbetätigungsbereich kann einem bestimmten Grad der Betätigung innerhalb zweier Bereichsgrenzen entsprechen. Der erste Betätigungsbereich kann ein Bereich sein, welcher eine durch den Bediener vollständig geöffnete Bremse umfasst.

In einer Ausführungsform des Verfahrens ist es vorgesehen, dass für die Kupplungssteuerkennlinie ein zweiter Bremsbetätigungsbereich bestimmt wird, bei welchem die Bremsbetätigung zu einer korrespondierenden Kupplungsbetätigung führt. Es kann sich um einen Inchbereich handeln, **wobei der Begriff "Inchen" insbesondere bei Landma**schinen eine Entkopplung zwischen Fahrantrieb und motorseitigen Nebenaggregaten beschreibt. Häufig wird damit auch ein zusätzliches Pedal an der Maschine assoziiert **("Inchpedal").** Bei dem zuvor erwähnten Inchbereich kann es sich um einen Rangierbereich oder Bereich mit niedrigen Fahrzeuggeschwindigkeiten handeln In dem zweiten Betätigungsbereich kann die Kupplungssteuerkennlinie so ausgebildet sein, dass eine stärkere Betätigung der Bremse ein stärkeres Öffnen der Kupplung bewirkt. Beispielsweise kann ein weiteres Drücken des Bremspedals von ca. 5 mm eine Verringerung des Kupplungsdrucks um ca. 6 bar verursachen, damit diese weiter geöffnet wird. Umgekehrt kann beispielsweise eine Verringerung eines Drückens der Bremse eine Erhöhung des Kupplungsdruck bedingen, womit die Kupplung mehr Drehmoment übertragen kann und weiter geschlossen ist. Der erste Betätigungsbereich kann ein Bereich sein, in welchem das Bremspedal durch den Bediener teilweise gedrückt ist.

In einer Ausführungsform des Verfahrens ist es vorgesehen, dass der zweite Bremsbetätigungsbereich in einem ersten Teilbereich, zweiten Teilbereich und dritten Teilbereich unterteilt ist. Jeder Teilbereich kann durch eine Teilfunktion gebildet sein, welche eine Reaktion der Kupplung auf eine Bremsbetätigung bestimmt. Beispielsweise kann der erste Teilbereich einem Drücken des Bremspedals in eine Stellung, in welcher das Bremspedal von einer ungedrückten Stellung 3 mm bis 4 mm beabstandet ist, entsprechen. Beispielsweise kann der zweite Teilbereich einem Drücken des Bremspedals in eine Stellung, in welcher das Bremspedal von einer ungedrückten Stellung 4 mm bis 13 mm beabstandet ist, entsprechen. Beispielsweise kann der dritte Teilbereich einem Drücken des Bremspedals in eine Stellung, in welcher das Bremspedal von einer ungedrückten Stellung 13 mm bis 16 mm beabstandet ist, entsprechen. Die Teilbereiche können sich aneinander anschließen, beispielsweise in der genannten Reihenfolge. Durch die Teilbereiche kann die selbsttätige Kupplungsbetätigung gemäß der Kupplungssteuerkennlinie besser einer natürlichen Kupplungsbetätigung durch einen Fahrer entsprechen.

Eine Veränderung der Bremsbetätigung in dem zweiten Teilbereich kann zu einer geringeren Veränderung der Kupplungsbetätigung führen als eine gleiche Veränderung der Bremsbetätigung in dem ersten und dem dritten Teilbereich. Die jeweilige Veränderung kann einer Steigung der Kupplungssteuerkennlinie bei einem bestimmten Grad der Bremsbetätigung entsprechen. Die jeweilige Veränderung kann dabei bezogen sein auf einen Durchschnitt der Veränderung über den jeweiligen Teilbereich. Der Durchschnitt kann über den gesamten Teilbereich ermittelt werden oder auch als ein Durchschnitt einer Steigung der Kennlinie an dem Anfang und dem Ende des jeweiligen Teilbereichs. Der zweite Teilbereich kann beispielsweise einen Bereich aufweisen, welcher von einem Fahrer als Schleifpunkt gespürt werden kann. Durch die geringere Veränderung relativ zu der Bremsbetätigungsveränderung in diesem Bereich kann ein ruckartiges Anfahren und auch Anhalten verhindert werden oder auch ein Abwürgen eines Verbrennungsmotors. Dagegen kann in den anderen beiden Teilbereichen so die Kupplung schnell zu dem Schleifpunkt verstellt werden und nach ausreichendem Angleichen der Drehgeschwindigkeiten an jeweiligen Kupplungsseiten schnell die Kupplung vollständig geschlossen werden. Dadurch kann die Kupplung schnell reagieren und ein Rückwärtsrollen ebenso wie ein Rucken im Antriebsstrang vermieden werden. Eine Überlastung der Kupplung kann so ebenfalls vermieden werden.

Eine Veränderung der Bremsbetätigung in dem dritten Teilbereich kann zu einer geringeren Veränderung der Kupplungsbetätigung führen als eine gleiche Veränderung der Bremsbetätigung in dem ersten Teilbereich. Dadurch kann ein für den Fahrer überraschend schnelles Anfahren vermieden werden, während gleichzeitig ein die Kupplung belastendes übermäßig langes Schleifen vermieden werden kann. Der dritte Teilbereich kann ein Bereich sein, in welchem die Kupplung vollständig geschlossen wird. Der erste Teilbereich kann ein Bereich sein, in welchem die Kupplung vollständig geöffnet wird.

In einer Ausführungsform des Verfahrens ist es vorgesehen, dass für die Kupplungssteuerkennlinie ein dritter Bremsbetätigungsbereich bestimmt wird, bei welchem die Bremsbetätigung zu keiner Kupplungsbetätigung führt. Beispielsweise kann es einen Endteilweg des Bremspedals geben, bei welcher ein Betätigungsdruck der Kupplung nicht verändert wird. So kann verhindert werden, dass die Kupplung nicht vollständig geöffnet wird, sofern die Bremse nicht vollständig gedrückt wird. Dem liegt der Gedanke zugrunde, dass ein Fahrer die Bremse häufig nur so fest Betätigen wird, wie zum Erreichen eines Stillstandes erforderlich ist. Ein vollständiges Drücken des Bremspedals ist dagegen ungewöhnlich und passiert beispielsweise nur in Notsituationen. Es kann also eine weitere zu dem ersten Betätigungsbereich ergänzende untere bzw. obere Grenze geben, bei welcher eine weitere Veränderung der Bremskraft keine Veränderung der Kupplungsbetätigungskraft mehr bewirkt. Der dritte Betätigungsbereich kann ein Bereich sein, in welchem die Bremse durch den Bediener vollständig geschlossen wird.

Der erste Betätigungsbereich und der dritte Betätigungsbereich können entgegengesetzte Endbereiche der Kupplungssteuerkennlinie bilden.

In alternativen Ausführungen kann anstatt eines ersten, zweiten und dritten Bremsbetätigungsbereichs auch lediglich ein einziger Bremsbetätigungsbereich vorgesehen werden. Dementsprechend ist dann lediglich eine Kupplungskennlinie zu berücksichtigen.

In einer Ausführungsform des Verfahrens ist es vorgesehen, dass das Erfassen jeweiliger Kupplungsbetätigungskenngrößen und jeweiliger Bremsbetätigungskenngrößen während des Rangierens durch den Bediener getrennt für jeweilige Anfahrkupplungsbetätigungen und jeweilige Anfahrbremsbetätigungen sowie für jeweilige Anhaltkupplungsbetätigungen und jeweilige Anhaltbremsbetätigungen erfolgt. Ein Anfahrvorgang kann ein Losfahren von einem Stillstand der Arbeitsmaschine sein. Ein Anhalten kann ein Bremsen von einer gewissen Fahrgeschwindigkeit bis zu einem Stillstand der Maschine sein. Bei dem Anfahren kann die Bremse gelöst werden, während die Kupplung geschlossen wird. Bei dem Anhalten kann die Bremse geschlossen werden, während die Kupplung geöffnet wird. Das Bestimmen der wenigstens einen Kupplungssteuerkennlinie kann ferner ein Bestimmen wenigstens einer Anfahrkupplungssteuerkennlinie in Abhängigkeit von den erfassten Kupplungsbetätigungskenngrößen der Anfahrkupplungsbetätigungen und den erfassten Bremsbetätigungskenngrößen der Anfahrbremsbetätigungen aufweisen. Das Bestimmen der wenigstens einen Kupplungssteuerkennlinie kann ferner ein Bestimmen wenigstens einer Anhaltkupplungssteuerkennlinie in Abhängigkeit von den erfassten Kupplungsbetätigungskenngrößen der Anhaltkupplungsbetätigungen und den erfassten Bremsbetätigungskenngrößen der Anhaltbremsbetätigung aufweisen. Mittels der Anfahrkupplungssteuerkennlinie kann durch den Steuerungsablauf eine Kupplungsbetätigung beim Anfahren in Abhängigkeit von einer Bremsbetätigung eines Bedieners selbsttätig gesteuert werden. Mittels der Anhaltkupplungssteuerkennlinie kann durch die Steuerung eine Kupplungsbetätigung beim Anhalten in Abhängigkeit von einer Bremsbetätigung eines Bedieners selbsttätig gesteuert werden. Das Anfahren und Anhalten kann also getrennt erfasst und eine jeweilige zugeordnete Kupplungssteuerkennlinie bestimmt werden. Dadurch kann ein entsprechend unterschiedliches Betätigungsverhalten des Bedieners beim Anfahren und Anhalten durch den Steuerungsablauf abgebildet werden. Das Verfahren kann beispielsweise ein Erkennen eines Anfahrens und eines Anhaltens aufweisen. Dies kann beispielsweise mittelbar daraus erkannt werden, dass zum Anhalten eine Bremskraft vergrößert und zum Losfahren die Bremskraft verringert wird. Zudem kann auch auf das Anhalten und Anfahren aus einer Fahrgeschwindigkeit der Arbeitsmaschine geschlossen werden. Beim Anhalten kann die Kupplung beispielsweise wesentlich früher und schneller relativ zum Schließen der Bremse geöffnet werden als beim Anfahren das Schließen der Kupplung relativ zum Öffnen der Bremse erfolgt, um einen optimierten Steuerungsablauf zu erhalten. Durch diese Berücksichtigung kann eine Hysterese, die sich auch aus dem Systemverhalten der verwendeten mechanischen, hydraulischen und/oder pneumatischen Komponenten ergeben kann, bei der Kupplungssteuerung implementiert werden.

In einer Ausführungsform des Verfahrens ist es vorgesehen, dass das Rangieren mit der Arbeitsmaschine durch den Bediener bei unterschiedlichen Lastfällen der Arbeitsmaschine erfolgt. Ein Lastfall kann beispielsweise eine unterschiedliche Beladung oder auch eine Neigung des Bodens sein. Das Erfassen jeweiliger Kupplungsbetätigungskenngrößen jeweiliger Kupplungsbetätigungen und jeweiliger Bremsbetätigungskenngrößen jeweiliger Bremsbetätigungen kann während des Rangierens durch den Bediener zugeordnet zu den jeweiligen Lastfällen erfolgen. Für jeden Lastfall kann eine Bestimmung einer zugeordneten Kupplungssteuerkennlinie in Abhängigkeit von den erfassten Kupplungsbetätigungskenngrößen und erfassten Bremsbetätigungskenngrößen des jeweiligen Lastfalls erfolgen. Mittels der jeweiligen dem jeweiligen Lastfall zugeordneten Kupplungssteuerkennlinie kann durch die Steuerung eine Kupplungsbetätigung in Abhängigkeit von einer Bremsbetätigung entsprechend eines Lastfalls selbsttätig gesteuert werden. Dadurch kann eine lastfallangepasste Kupplungssteuerung implementiert werden. Der Lastfall kann dabei automatisch oder durch den Fahrer ausgewählt werden.

In einer Ausführungsform des Verfahrens ist es vorgesehen, dass das Verfahren einen Schritt einer Auswahl eines Lastfalls, welcher keinem der Lastfälle während des Rangierens entspricht, aufweist. Das Verfahren kann einen Schritt eines Berechnens einer dem ausgewählten Lastfall zugeordneten Kupplungssteuerkennlinie in Abhängigkeit von wenigstens zwei unterschiedlichen Lastfällen zugeordneten bestimmten Kupplungssteuerkennlinien aufweisen. Diese Schritte können auch während des Steuerungsablaufs durchgeführt werden. Beispielsweise kann der Lastfall, welcher keinem der Lastfälle während des Rangierens entspricht, so interpoliert oder extrapoliert werden. Mittels der dem ausgewählten Lastfall zugeordneten Kupplungssteuerkennlinie kann durch den Steuerungsablauf eine Kupplungsbetätigung in Abhängigkeit von einer Bremsbetätigung eines Bedieners entsprechend des ausgewählten Lastfalls selbsttätig gesteuert werden. Beispielsweise können im experimentellen Teil des Verfahrens nur ein Lastfall mit einem sehr schweren Anhänger und ein Lastfall ohne Anhänger erfasst worden sein. Nun kann ein leichterer Anhänger an die Arbeitsmaschine angehangen worden sein. Dies kann durch den Bediener vorgegeben werden oder auch automatisch erkannt werden. Entsprechend kann nun eine angepasste Kupplungssteuerkennlinie für den Lastfall mit leichtem Anhänger berechnet werden, beispielsweise mittels Interpolation der Kupplungssteuerkennlinie für den Lastfall ohne Anhänger und der Kupplungssteuerkennlinie für den Lastfall mit schwerem Anhänger. Der Berechnung kann beispielsweise ein Gewicht des schweren Anhängers und des leichten Anhängers zugrunde gelegt werden. Ein ähnliches Vorgehen kann gewählt werden, um unterschiedliche Steigungen zu berücksichtigen. Somit kann auch eine Kupplungssteuerkennlinie stufenlos an unterschiedliche Lastfälle angepasst werden.

In einer Ausführungsform des Verfahrens ist es vorgesehen, dass das Verfahren einen Schritt einer Auswahl eines Lastfalls durch den Bediener aufweist. Das Verfahren kann zudem einen Schritt eines Modifizierens einer jeweiligen Kupplungssteuerkennlinie durch einen Betätigungsoffset aufweisen. Diese Schritte können auch während des Steuerungsablaufs durchgeführt werden. Durch den Betätigungsoffset kann die Kupplungssteuerkennlinie verschoben werden. Dadurch kann beispielsweise ein bestimmter Betätigungsdruck der Kupplung bei einer geringeren oder größeren Bremspedalbetätigung erzielt werden. Mittels der modifizierten Kupplungssteuerkennlinie kann durch den Steuerungsablauf die Kupplungsbetätigung in Abhängigkeit von der Bremsbetätigung des Bedieners selbsttätig gesteuert werden. Dadurch kann die Kupplungssteuerkennlinie an persönliche Präferenzen oder auch einen Verschleiß, beispielsweise der Bremse oder der Kupplung, angepasst werden.

In einer Ausführungsform des Verfahrens ist es vorgesehen, dass die jeweiligen Bremsbetätigungskenngrößen einen Bremsbetätigungsgradienten bezogen auf die Zeit und ein Bremsbetätigungsausmaß aufweisen. Der Bremsbetätigungsgradient bezogen auf die Zeit kann eine Geschwindigkeitsänderung einer Bremspedalbewegung sein. Das Bremsbetätigungsausmaß kann eine Stellung des Bremspedals sein. Durch die Berücksichtigung des Bremsbetätigungsgradientens bezogen auf die Zeit bei der Bestimmung der Kupplungssteuerkennlinie kann auch eine Geschwindigkeit der Bremsbetätigung berücksichtigt werden. So kann berücksichtigt werden, dass bei einer schnellen Bremsung die Kupplung anders angesteuert werden sollte als bei einer langsamen Bremsung. Beispielsweise kann eine steilere Kupplungsdruck-Kennlinie bei einem höheren Gradienten vorgesehen werden. Beispielsweise ist es wünschenswert, dass bei einer Notbremsung die Kupplung quasi sofort aufgeht. So können auch eine Dynamik der Betätigung beispielsweise durch eine verschobene Kupplungssteuerkennlinie abgebildet werden. Als Eingangsgröße beim Steuern der Kupplungsbetätigung mittels des Steuerablaufs kann so beispielsweise nicht nur ein Bremspedalweg oder Bremspedalwinkel berücksichtigt werden, sondern auch ein Bremspedalstellungsgradient bezogen auf die Zeit.

Ein zweiter Aspekt betrifft eine Arbeitsmaschine mit einem Antriebsstrang. Der Antriebsstrang weist einen Motor, eine Bremse und eine Kupplung, mittels welcher der Motor mit einem Abtrieb wirkverbindbar ist, auf. Zudem weist die Arbeitsmaschine eine Steuervorrichtung und eine Erfassungsvorrichtung auf. Die Erfassungsvorrichtung ist dazu ausgebildet ist, jeweilige Bremsbetätigungskenngrößen der Bremse zu erfassen. Die Erfassungsvorrichtung kann beispielsweise einen Bremspedalwinkelsensor oder einen Bremspedalwegsensor, wie ein Potentiometer aufweisen. Die Erfassungsvorrichtung kann beispielsweise einen Druck an der Bremse erfassen. Die Steuervorrichtung ist dazu ausgebildet, die Kupplung in Abhängigkeit von der jeweiligen erfassten Bremsbetätigungskenngröße gemäß einer mittels des Verfahrens gemäß einem der vorhergehenden Ansprüche bestimmten Steuerungsablauf zu betätigen. So kann eine Antriebsmaschine bereitgestellt werden, welche selbsttätig die Kupplung in Abhängigkeit von der Bremsbetätigung steuern kann.

Alternativ oder zusätzlich kann die Antriebsmaschine dazu ausgebildet sein, das Verfahren gemäß dem ersten Aspekt durchzuführen. Die Erfassungsvorrichtung ist in diesem Fall dazu ausgebildet, jeweilige Kupplungsbetätigungskenngrößen der Kupplung zu erfassen. Die Erfassungsvorrichtung kann beispielsweise einen Kupplungspedalwinkelsensor oder einen Kupplungspedalwegsensor, wie ein Potentiometer aufweisen. Um die Kosten zu verringern, kann ein solcher Sensor identisch zu dem Sensor zur Erfassung jeweiliger Bremsbetätigungskenngrößen ausgebildet sein. Die Erfassungsvorrichtung kann beispielsweise einen Druck an der Kupplung erfassen. Damit kann durch die Arbeitsmaschine die notwendigen Daten zum Bestimmen des Steuerungsablaufs erzeugt werden. So kann beispielsweise auch ein Endkunde die Steuerung anlernen.

Der Steuerungsablauf kann ein Teil eines übergeordneten Steuerverfahrens sein, das den Antriebsstrang oder die Arbeitsmaschine steuert. Der Steuerungsablauf kann beispielsweise ein Programm sein, das in der Steuervorrichtung ausgeführt wird. Durch Festlegung der jeweiligen Steuerkennlinien können beispielsweise jeweilige Variablen des Programms bestimmt werden. Ebenso kann eine Reaktion des Programms auf jeweilige erfasste Bremsbetätigungskenngrößen definiert werden. Mittels der jeweiligen Kupplungssteuerkennlinien kann durch den Steuerungsablauf eine Kupplungsbetätigung in Abhängigkeit von einer Bremsbetätigung eines Bedieners selbsttätig durch die Steuervorrichtung gesteuert werden.

In einer Ausführungsform der Arbeitsmaschine ist es vorgesehen, dass die Arbeitsmaschine ferner einen Bremslichtschalter aufweist. Der Bremslichtschalter kann beispielsweise ein Bremslicht aktivieren, wenn das Bremspedal einen vorgegebenen Mindestweg bewegt wurde. Die Erfassungsvorrichtung kann dazu ausgebildet sein, die jeweilige erfasste Bremsbetätigungskenngröße in Abhängigkeit von einem Zustand des Bremslichtschalters zu verifizieren. Beispielsweise kann die erfasste Bremsbetätigungskenngröße falsch sein, wenn diese null ist, aber der Bremslichtschalter zum Anschalten des Bremslichts geschaltet wurde. Die Steuervorrichtung kann dazu ausgebildet sein, in Abhängigkeit von der Verifizierung der Bremsbetätigung ein Steuersignal auszugeben. Das Steuersignal kann eine Kupplungsbetätigung gemäß der Kupplungssteuerkennlinie verursachen, sofern die erfasste Bremsbetätigungskenngröße verifiziert wurde. Sofern die erfasste Bremsbetätigungskenngröße nicht verifiziert werden konnte, kann das Steuersignal eine Fehlerreaktion starten, wie beispielsweise das Abspeichern eines Fehlercodes und alternativ oder zusätzlich ein Öffnen der Kupplung zu deren Schutz. Dies kann ebenfalls ein Schritt des Steuerungsablaufs sein.

Weitere Merkmale ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar. Die sich aus den jeweiligen Aspekten ergebenden Merkmale und Vorteile stellen auch jeweilige Merkmale und Vorteile anderer Aspekte dar.

### Kurze Beschreibung der Zeichnungen

Fig. 1 veranschaulicht schematisch einen Antriebsstrang für eine Arbeitsmaschine.
Fig. 2 veranschaulicht ein Verfahren zum Bestimmen eines Steuerungsablauf des Antriebsstrangs gemäß Fig. 1.
Fig. 3 veranschaulicht ein Kennlinienfeld des Steuerungsablauf, mittels welchem durch den eine Kupplungsbetätigung in Abhängigkeit von einer Bremsbetätigung eines Bedieners selbsttätig gesteuert wird.
Fig. 4 veranschaulicht eine alternative Ausführungsform einer Kennlinie des Steuerungsablaufs, bei welcher die Kupplungssteuerkennlinie eine Anfahrkupplungssteuerkennlinie und eine Anhaltkupplungssteuerkennlinie aufweist.

### Detaillierte Beschreibung von Ausführungsformen

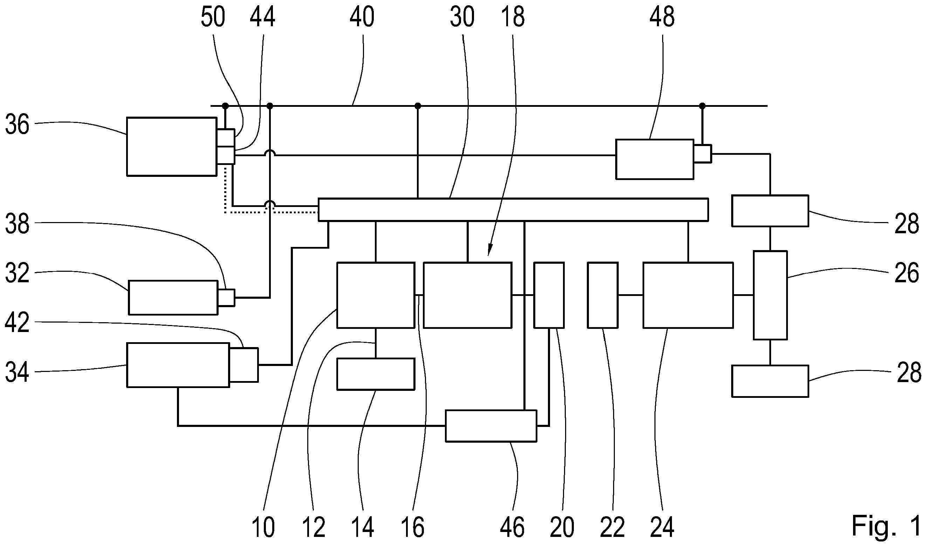

Fig. 1 veranschaulicht schematisch einen Antriebsstrang für eine Arbeitsmaschine. Der Antriebsstrang weist einen Motor 10 auf. Der Motor 10 kann an einer Zapfwelle 12 Leistung für einen Verbraucher 14, wie eine Arbeitshydraulik, bereitstellen. Eine Abtriebswelle 16 des Motors 10 überträgt ein Drehmoment an eine als Schaltkupplung ausgebildete Kupplung 18. Insbesondere kann die Kupplung 18 als Anfahrkupplung ausgebildet sein. Die Kupplung 18 weist eine Primärseite 20 und eine Sekundärseite 22 auf. Die Kupplung 18 kann durch deren Betätigung die Primärseite 20 und die Sekundärseite 22 zur Drehmomentübertragung miteinander verbinden. Durch einen Druckaufbau in der Kupplung 18 können die Primärseite 20 und die Sekundärseite 22 aneinandergepresst werden, wodurch sich deren Drehzahl und die auch eine Drehzahl damit verbundener Teile des Antriebsstrangs aneinander anpassen. Dabei kann ein konstruktiv bedingter aber vernachlässigbarer Restschlupf vorhanden sein. Die Kupplung 18 ist dann geschlossen. Sofern keinerlei Druck in der Kupplung 18 aufgebaut ist, ist die Primärseite 20 vollständig von der Sekundärseite 22 getrennt, sodass kein Drehmoment übertragen wird und die Kupplung 18 geöffnet ist. Bei einem Betätigungsdruck dazwischen kann ein Zustand bereitgestellt werden, bei welchem eine Drehzahldifferenz zwischen der Primärseite 20 und der Sekundärseite 22 vorliegt, die Primärseite 20 aber die Sekundärseite 22 bereits antreibt und ein Drehmoment nur teilweise übertragbar ist. Dieser Zustand beginnt bei einem Schleifpunkt.

Die Kupplung 18 ist durch deren Sekundärseite 22 mit einem Synchrongetriebe 24 verbunden, mittels welchem mehrere schaltbare Gänge bereitgestellt werden. Das Synchrongetriebe 24 ist mit einem Differential 26 verbunden, welches das übertragene Drehmoment auf die beiden Räder 28 einer Achse aufteilt. Durch Schalten der Gänge des Synchrongetriebes 24 können unterschiedliche Übersetzungen zwischen dem Motor 10 und dem Differential 26 bereitgestellt werden. Die Steuervorrichtung 30 ist dazu ausgebildet, das Synchrongetriebe 24 zu steuern, um die jeweiligen Gänge zu wechseln.

Der Antriebsstrang weist eine Steuervorrichtung 30, ein Fahrpedal 32, ein Kupplungspedal 34 und ein Bremspedal 36 auf. An dem Fahrpedal 32 ist ein Fahrpedalwinkelsensor 38 angeordnet, welcher mit einem CAN-Bus 40 der Arbeitsmaschine verbunden ist und eine Betätigung des Fahrpedals 32 erfasst. Die erfasste Betätigung des Fahrpedals 32 wird darüber an die Steuervorrichtung 30 übermittelt, welche in Abhängigkeit davon eine Leistungsabgabe des Motors 10 steuert. An dem Kupplungspedal 34 ist ein Kupplungspedalwinkelsensor 42 angeordnet, welcher mit der Steuervorrichtung 30 der Arbeitsmaschine verbunden ist und eine Betätigung des Kupplungspedals 34 und damit eine Kupplungsbetätigung erfasst. Der Kupplungspedalwinkelsensor 42 erfasst eine Winkelstellung als Kupplungsbetätigungskenngröße jeweiliger Kupplungsbetätigungen. Die erfasste Betätigung des Kupplungspedals 34 wird darüber an die Steuervorrichtung 30 übermittelt. Die Steuerung der Kupplung 18 erfolgt direkt durch die Betätigung des Kupplungspedals 34, welches ein Druck in einem Zylinder 46 der Kupplung 18 zu deren Betätigung ändert. An dem Bremspedal 36 ist ein Bremspedalwinkelsensor 44 angeordnet, welcher zur Übermittlung seiner Sensordaten mit der Steuervorrichtung 30 verbunden ist und eine Betätigung des Bremspedals 36 und damit eine Bremsbetätigung erfasst. Der Bremspedalwinkelsensor 44 erfasst eine Winkelstellung als Bremsbetätigungskenngröße jeweiliger Bremsbetätigungen. Der Antriebsstrang weist eine Bremse 48 mit einem Geber-Nehmer-Zylinder auf, welche an den Räder 28 durch einen Druckaufbau in der Bremse 48 eine Verzögerung bewirken kann. Bei volldurchgedrücktem Bremspedal 36 wird eine maximale Verzögerung bzw. Bremskraft bereitgestellt. Sofern das Bremspedal 36 in seiner Ausgangsstellung ist, wird keine Bremskraft bereitgestellt. Die jeweiligen Sensoren bilden zusammen eine Erfassungsvorrichtung.

Zusätzlich ist an dem Bremspedal 36 ein Bremslichtschalter 50 angeordnet, welcher mit dem CAN-Bus 40 verbunden ist. Der Bremslichtschalter 50 erfasst, ob das Bremspedal 36 einen vorgegebenen Mindestweg aus seiner Ausgangsstellung verstellt ist. In Abhängigkeit davon wird ein Bremslicht der Arbeitsmaschine gesteuert. Zudem kann in einer Ausführungsform die erfasste Bremsbetätigungskenngröße jeweiliger Bremsbetätigungen durch die Steuervorrichtung 30 in Abhängigkeit von einem Zustand des Bremslichtschalters 50 verifiziert werden. Dafür ist der Bremslichtschalter 50 mit der Steuervorrichtung 30 verbunden.

Zudem weist der Antriebsstrang in der gezeigten Ausführungsform einen Drucksensor 52 auf, welcher an der Bremse 48 angeordnet ist und einen Druck in der Bremse 48 erfasst. Dieser Drucksensor 52 ist mit dem CAN-Bus 40 verbunden und übermittelt so seine erfassten Druckdaten an die Steuervorrichtung 30. Der erfasste Druck der Bremse kann als Bremsbetätigungskenngröße jeweiliger Bremsbetätigungen alternativ oder zusätzlich zu der Winkelstellung des Bremspedals 36 genutzt werden. Die erfasste Bremsbetätigungskenngröße jeweiliger Bremsbetätigungen kann durch die Steuervorrichtung 30 in einer Ausführungsform alternativ oder zusätzlich zu dem Zustand des Bremslichtschalters 50 in Abhängigkeit von dem erfassten Druck der Bremse 48 verifiziert werden.

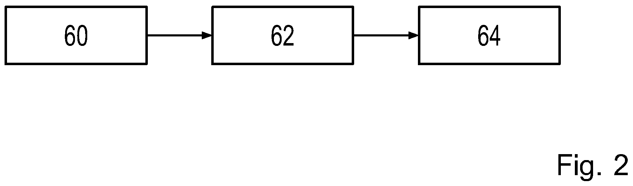

Die Steuervorrichtung 30 ist dazu ausgebildet, mit einem Steuerungsablauf, welcher wenigstens eine Kupplungssteuerkennlinie aufweist, die Kupplung 18 in Abhängigkeit von einer Bremsbetätigung eines Bedieners, also einem Drücken des Bremspedals 36, selbsttätig zu steuern. Fig. 2 veranschaulicht ein Verfahren zum Bestimmen eines solchen Steuerungsablauf.

In einem Schritt 60 des Verfahrens erfolgt ein mehrfaches Rangieren mit der Arbeitsmaschine durch den Bediener. Dazu fährt der Bediener in einem Rangierbeispiel mit der Arbeitsmaschine auf einer flachen Ebene ohne Hindernisse, wobei ein wiederholtes Anfahren mit der Arbeitsmaschine und ein wiederholtes Anhalten mit der Arbeitsmaschine erfolgt. In Schritt 62 des Verfahrens erfolgt ein Erfassen jeweiliger Kupplungsbetätigungskenngrößen jeweiliger Kupplungsbetätigungen und jeweiliger Bremsbetätigungskenngrößen jeweiliger Bremsbetätigungen während des Rangierens. Dafür werden die oben im Zusammenhang mit Fig. 1 geschilderten Sensoren genutzt. So kann erfasst werden, wie der Bediener die Kupplungsbetätigung und die Bremsbetätigung aufeinander abstimmt, um ein gutes Fahrverhalten der Arbeitsmaschine zu erzielen. In Schritt 64 des Verfahrens erfolgt ein Bestimmen wenigstens einer Kupplungssteuerkennlinie in Abhängigkeit von den erfassten Kupplungsbetätigungskenngrößen und erfassten Bremsbetätigungskenngrößen, wobei jeweils eine oder mehrere Kupplungsbetätigungskenngrößen und Bremsbetätigungskenngrößen berücksichtigt werden können. So kann durch die Steuervorrichtung 30 mittels der jeweiligen Kupplungssteuerkennlinien eine menschliche Betätigung der Kupplung 18 relativ zu der Bremsbetätigung nachgeahmt werden. Mittels der jeweiligen Kupplungssteuerkennlinien kann durch den Steuerungsablauf eine Kupplungsbetätigung in Abhängigkeit von einer Bremsbetätigung eines Bedieners selbsttätig durch die Steuervorrichtung 30 gesteuert werden.

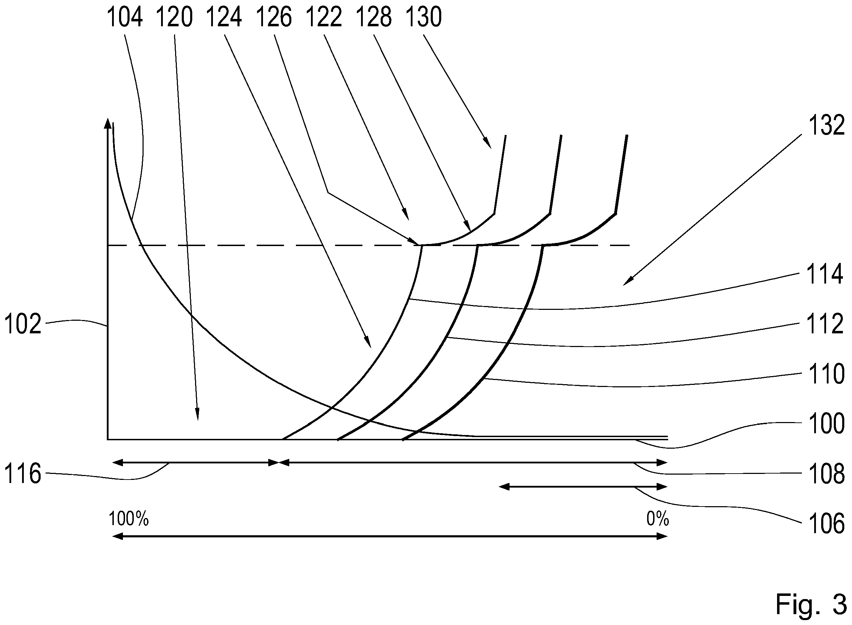

Fig. 3 veranschaulicht ein Kennlinienfeld des Steuerungsablauf, mittels welchem durch eine Kupplungsbetätigung in Abhängigkeit von einer Bremsbetätigung eines Bedieners selbsttätig gesteuert wird. Auf einer Abszisse 100 ist ein Betätigungsweg des Bremspedals 36 aufgetragen. Auf der rechten Seite bei 0% befindet sich das Bremspedal 36 in seiner Ausgangsstellung, in welcher der Bediener das Bremspedal 36 nicht drückt und somit ein Bremspedalweg 0 mm ist. Auf der linken Seite bei 100% befindet sich das Bremspedal 36 in seiner voll durchgedrückten Stellung, in welcher der Bediener das Bremspedal 36 bis gegen einen Anschlag, 37 mm Richtung eines Fahrzeugbodens, drückt. Auf der Ordinate 102 wird ein Moment oder eine Kraft angezeigt. Eine Bremskraftkennlinie 104 zeigt, wie der Bremsdruck und damit auch die Bremskraft mit stärkerem Drücken des Bremspedals ansteigt. Daraus ergeben sich jeweilige Verzögerungsmomente pro Rad 28. Der Pfeil 106 veranschaulicht einen Stellungsbereich der Bremspedals 36, welcher keine Bremskraft bewirkt und somit ein Leerweg ist. Der Pfeil 108 veranschaulicht einen Stellungsbereich des Bremspedals 36, bei welchem der Bediener beim Rangieren simultan das Kupplungspedal 34 gedrückt hat und welcher somit ein Inchbereich ist, in welchem der Steuerungsablauf die Kupplung 18 korrespondierend zu der Bremsbetätigung steuert. Pfeil 116 veranschaulicht einen Bereich, in welchem nur die Bremskraft verstärkt durch festeres Drücken des Bremspedals 36 verstärkt wird und die Kupplung 18 bereits voll geöffnet ist.

Das in Fig. 3 veranschaulichte Kennlinienfeld weist drei Kupplungssteuerkennlinien auf, eine leichte Kupplungssteuerkennlinie 110, eine mittlere Kupplungssteuerkennlinie 112 und eine starke Kupplungssteuerkennlinie 114, welche das Kupplungsmoment und damit einen Kupplungssolldruck in Abhängigkeit von der Stellung des Bremspedals 36 darstellen. Die drei Kupplungskennlinien wurden in dem gezeigten Beispiel in Abhängigkeit von den jeweiligen Kupplungsbetätigungskenngrößen jeweiliger Kupplungsbetätigungen und jeweiligen Bremsbetätigungskenngrößen jeweiliger Bremsbetätigungen während des Rangierens bestimmt. Dafür wurden Gruppen der Messdaten durch eine Auswahl gebildet und diese gemittelt. Die bestimmten Kupplungssteuerkennlinien werden in einer Ausführungsform auch an eine vorbestimmte Form nach der Mittelung angepasst werden. In einer anderen Ausführungsform ist für die Bestimmung jeder der drei Kupplungssteuerkennlinien 110, 112, 114 ein Rangieren bei zugeordneten unterschiedlichen Lastfällen durchgeführt worden.

Jeder der drei Kupplungssteuerkennlinien 110, 112, 114 weist einen ersten Bremsbetätigungsbereich 120 auf, bei welchem ein Verändern der Bremspedalstellung zu keiner Veränderung eines Drucks in der Kupplung 18 führt. In dem ersten Bremsbetätigungsbereich 120 erfolgt noch kein Inchen der Kupplung 18, womit die Kupplung korrespondierend zu einem Betätigungsausmaß der Bremse mit Druck beaufschlagt wird, sondern die Kupplung 18 bleibt vollständig geöffnet. Ein korrespondierender Betätigungsdruck der Kupplung 18 ist 0 bar. Für die starke Kupplungssteuerkennlinie 114 entspricht der erste Bremsbetätigungsbereich 120 dem Pfeil 116 und macht 30% eines möglichen Bremspedalwegs aus. An den ersten Bremsbetätigungsbereich 120 schließt sich ein zweiter Bremsbetätigungsbereich 122 an, bei welchem die Bremsbetätigung zu einer korrespondierenden Kupplungsbetätigung führt. In dem zweiten Bremsbetätigungsbereich 122 weist jede der Kupplungssteuerkennlinien 110, 112, 114 drei charakteristische Teilbereiche auf. In einem ersten Teilbereich 124 steigt ein Kupplungsdruck mit einem Abschwächen der Bremskraft durch Verstellen des Bremspedals 36 in Richtung seiner Ausgangsstellung schnell an. Hierdurch wird die Kupplung 18 bzw. deren Primärseite 20 und Sekundärseite 22 schnell an einen Schleifpunkt herangefahren. Ein Übergang 126 zu einem sich an den ersten Teilbereich 124 anschließenden zweiten Teilbereich 128 ist in dem gezeigten Ausführungsbeispiel ein Schleifpunkt. In dem zweiten Teilbereich 128 steigt ein Kupplungsdruck mit einem Abschwächen der Bremskraft durch Verstellen des Bremspedals 36 in Richtung seiner Ausgangsstellung durchschnittlich weniger schnell an als in dem ersten Teilbereich 124. An den zweiten Teilbereich 128 schließt sich ein dritter Teilbereich 130 an. In dem dritten Teilbereich 130 kann bereits eine Drehzahl der Primärseite 20 der Kupplung sehr nah an einer Drehzahl der Sekundärseite 22 der Kupplung 18 sein. Entsprechend kann die Kupplung 18 nun schnell vollständig geschlossen sein, um eine Reibleistung zu mindern und das (mitunter maximale) Drehmoment mit weniger Verschleiß übertragen zu können. In dem dritten Teilbereich 130 steigt ein Kupplungsdruck mit einem Abschwächen der Bremskraft durch Verstellen des Bremspedals 36 in Richtung seiner Ausgangsstellung durchschnittlich schneller an als in dem ersten Teilbereich 124. An den zweiten Bremsbetätigungsbereich 122 schließt sich ein dritter Bremsbetätigungsbereich 132 an, bei welchem die Bremsbetätigung zu einer korrespondierenden Kupplungsbetätigung führt. In dem dritten Betätigungsbereich 132 ist die Kupplung 132 bereits vollständig geschlossen und ein Betätigungsdruck beträgt 20 bar. Der dritte Betätigungsbereich 132 kann größer sein als der Leerweg des Bremspedals 36, um beispielsweise bei schweren Lasten ein Rückrollen an einer Steigung zu vermeiden. Die Bremsbetätigungsbereich wurden im Hinblick auf ein Anfahren beschrieben, bei welchem die Bremse 48 gelöst wird. Es ergibt sich eine umgekehrte Betätigung beim Anhalten.

Die drei Kupplungssteuerkennlinien 110, 112, 114 können von dem Bediener durch ein Signal an die Steuervorrichtung 30 ausgewählt werden, um eine einem Lastfall angepassten Steuerungsablauf zu selektieren. Die leichte Kupplungssteuerkennlinien 110 ist für das Fahren mit leerer Arbeitsmaschine in einer Ebene vorgesehen. Die mittlere Kupplungssteuerkennlinien 112 ist für das Fahren mit leerer Arbeitsmaschine in einer Steigung vorgesehen. Die starke Kupplungssteuerkennlinien 114 ist für das Fahren mit beladener Arbeitsmaschine in einer Steigung vorgesehen. Die Einstufung der Anwendungsfälle der zuvor erwähnten Kupplungssteuerkennlinien 110, 112, 114 ist exemplarisch zu sehen und kann in Abhängigkeit des jeweiligen Fahrzeugs (zum Beispiel aufgrund anderer Leistungsparameter des Motors 10) eine abweichende Verteilung aufweisen.

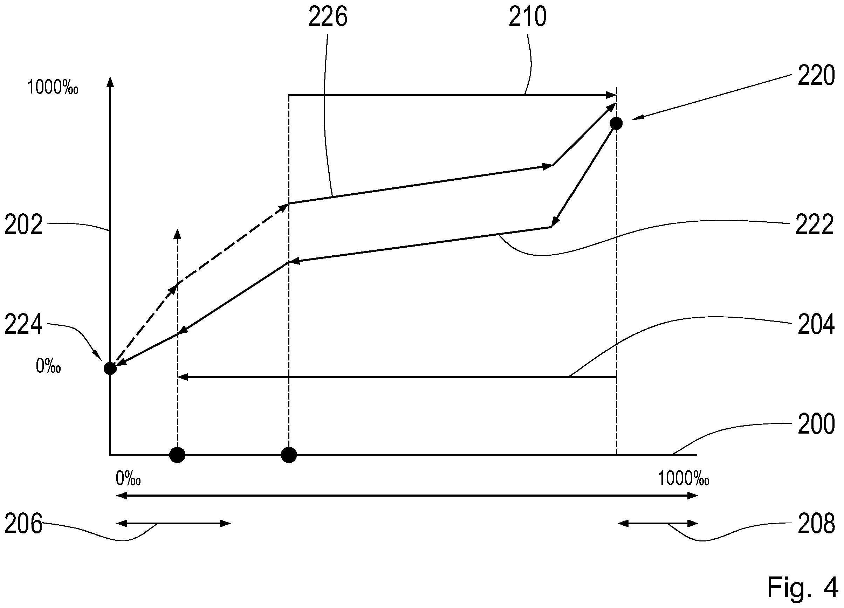

Fig. 4 veranschaulicht eine alternative Ausführungsform einer Kennlinie des Steuerungsablaufs, hier am Beispiel der mittleren Kupplungssteuerkennlinien 112, bei welcher die Kupplungssteuerkennlinie eine Anfahrkupplungssteuerkennlinie 222 und eine Anhaltkupplungssteuerkennlinie 226 aufweist. Jede Kennlinie des Kennlinienfelds des Steuerungsablaufs kann so eine Hysterese bilden.

Auf der Abszisse 200 von Fig. 4 ist eine Stellung des Bremspedals 36 aufgetragen, wobei das Bremspedal 36 nun im Gegensatz zu Fig. 3 rechts vollständig gedrückt ist und sich links in seiner Ausgangsstellung befindet. Auf der Ordinate 202 ist die Kupplungsposition abzulesen, wobei die Kupplung 18 bei 0 Promille vollständig geschlossen ist. Ein Pfeil 204 veranschaulicht einen Inchbereich für ein Anfahren und Pfeil 210 einen Inchbereich für ein Anhalten. Ein Pfeil 206 veranschaulicht den Leerweg des Bremspedals 36 und ein Pfeil 208 reines Bremsen, während die Kupplung 18 vollständig offen ist.

An der Stelle 220 steht die Arbeitsmaschine und die Anfahrkupplungssteuerkennlinie 222 beginnt. An der Stelle 220 im Diagramm ist die Bremse 48 bedruckt und die Kupplung 18 vollständig offen. Durch Lösen der Bremse 48 bzw. des Bremspedals 36 wird die Kupplung 18 im durch Pfeil 204 veranschaulichten Inchbereich geschlossen. Ab Ende des Inchbereichs 204 kann die Kupplung 18 vollständig geschlossen sein oder beispielsweise proportional zum Lösen der Bremse 48 weiter geschlossen werden. Die Anfahrkupplungssteuerkennlinie 222 hat ebenfalls die Bremsbetätigungsbereiche wie im Zusammenhang von Fig. 3 besprochen.

An der Stelle 224 steht die Arbeitsmaschine und die Anhaltkupplungssteuerkennlinie 226 beginnt. Wie zu erkennen ist, wird die Kupplung 18 beim Anhalten relativ zu einer Bremspedalstellung weiter geöffnet. Dadurch wird berücksichtigt, dass beim Anhalten nicht für ein gewünschtes Antriebsstrangverhalten langsam eine Drehmomentübertragung an die Räder 28 geschlossen werden muss, sondern eine vergleichsweise relativ zur Bremsbetätigung frühe Öffnung zum Abbau der Antriebskraft an den Rädern 28 gewünscht ist. Der Inchbereich beim Anhalten, veranschaulicht durch Pfeil 210, beginnt entsprechend bei einer stärkeren Betätigung der Bremse und nunmehr weiter geöffneten Kupplung 18. Der Inchbereich beim Anhalten kann ein Rückwärtsrollen an einer Steigung verhindern, falls das Bremspedal 36 nicht schnell genug durch den Fahrer weit genug gedrückt wird.

### Bezugszeichen

- 10: Motor
- 14: Verbraucher
- 16: Abtriebswelle
- 18: Kupplung
- 20: Primärseite der Kupplung
- 22: Sekundärseite der Kupplung
- 24: Synchrongetriebe
- 26: Differential
- 28: Räder
- 30: Steuervorrichtung
- 32: Fahrpedal
- 34: Kupplungspedal
- 36: Bremspedal
- 38: Fahrpedalwinkelsensor
- 40: CAN-Bus
- 42: Kupplungspedalwinkelsensor
- 44: Bremspedalwinkelsensor
- 46: Zylinder
- 48: Bremse
- 50: Bremslichtschalter
- 52: Drucksensor
- 60: Schritt des Rangierens
- 62: Schritt des Erfassens
- 64: Schritt des Bestimmens
- 100: Abszisse
- 102: Ordinate
- 104: Bremskraftkennlinie
- 106: Pfeil
- 108: Pfeil
- 110: leichte Kupplungssteuerkennlinie
- 112: mittlere Kupplungssteuerkennlinie
- 114: starke Kupplungssteuerkennlinie
- 116: Pfeil
- 120: erster Bremsbetätigungsbereich
- 122: zweiter Bremsbetätigungsbereich
- 124: erster Teilbereich
- 126: Übergang
- 128: zweiter Teilbereich
- 130: dritter Teilbereich
- 132: dritter Bremsbetätigungsbereich
- 200: Abszisse
- 202: Ordinate
- 204: Pfeil
- 206: Pfeil
- 208: Pfeil
- 210: Pfeil
- 220: Stelle
- 222: Anfahrkupplungssteuerkennlinie
- 224: Stelle
- 226: Anhaltkupplungssteuerkennlinie

## Patentansprüche

1. Verfahren zum Bestimmen eines Steuerungsablaufs eines Antriebsstrangs einer Arbeitsmaschine, wobei mit dem Steuerungsablauf eine Kupplung (18) des Antriebsstrangs in Abhängigkeit von einer Bremsbetätigung gesteuert wird, wenigstens die folgenden Schritte aufweisend:
Rangieren (60) mit der Arbeitsmaschine durch einen Bediener;
Erfassen (62) jeweiliger Kupplungsbetätigungskenngrößen jeweiliger Kupplungsbetätigungen und jeweiliger Bremsbetätigungskenngrößen jeweiliger Bremsbetätigungen während des Rangierens; und
Bestimmen (64) wenigstens einer Kupplungssteuerkennlinie (110, 112, 114) in Abhängigkeit von den erfassten Kupplungsbetätigungskenngrößen und den erfassten Bremsbetätigungskenngrößen, wobei mittels der jeweiligen Kupplungssteuerkennlinie (110, 112, 114) durch den Steuerungsablauf eine Kupplungsbetätigung in Abhängigkeit von einer Bremsbetätigung eines Bedieners selbsttätig gesteuert wird.

2. Verfahren nach Anspruch 1, wobei der Schritt des Bestimmens der Kupplungssteuerkennlinie (110, 112, 114) eine Mittelung jeweiliger erfasster Kupplungsbetätigungskenngrößen und jeweiliger erfasster Bremsbetätigungskenngrößen bei einer Vielzahl von Rangiervorgängen aufweist.

3. Verfahren nach Anspruch 1 oder 2, wobei wenigstens eine erste Kupplungssteuerkennlinie (110, 112) bei einer ersten Auswahl jeweiliger erfasster Kupplungsbetätigungen und jeweiliger erfasster Bremsbetätigungen durch den Bediener bestimmt wird und wenigstens eine zweite Kupplungssteuerkennlinie (114) bei einer zu der ersten Auswahl verschiedenen zweiten Auswahl jeweiliger erfasster Kupplungsbetätigungen und jeweiliger erfasster Bremsbetätigungen durch den Bediener bestimmt wird.

4. Verfahren nach einem der vorhergehenden Ansprüche, wobei für die Kupplungssteuerkennlinie (110, 112, 114) ein erster Bremsbetätigungsbereich (120) bestimmt wird, bei welchem die Bremsbetätigung zu keiner Kupplungsbetätigung führt.

5. Verfahren nach einem der vorhergehenden Ansprüche, wobei für die Kupplungssteuerkennlinie (110, 112, 114) ein zweiter Bremsbetätigungsbereich (122) bestimmt wird, bei welchem die Bremsbetätigung zu einer korrespondierenden Kupplungsbetätigung führt.

6. Verfahren nach Anspruch 5, wobei der zweite Bremsbetätigungsbereich (122) in einem ersten Teilbereich (124), zweiten Teilbereich (128) und dritten Teilbereich (130) unterteilt ist, wobei sich die Teilbereiche (124, 128, 130) aneinander anschließen und wobei eine Veränderung der Bremsbetätigung in dem zweiten Teilbereich (128) zu einer geringeren Veränderung der Kupplungsbetätigung führt als eine gleiche Veränderung der Bremsbetätigung in dem ersten (122) und dem dritten Teilbereich (130).

7. Verfahren nach einem der vorhergehenden Ansprüche 4 bis 6, wobei für die Kupplungssteuerkennlinie (110, 112, 114) ein dritter Bremsbetätigungsbereich (132) bestimmt wird, bei welchem die Bremsbetätigung zu keiner Kupplungsbetätigung führt.

8. Verfahren nach einem der vorhergehenden Ansprüche, wobei das Erfassen jeweiliger Kupplungsbetätigungskenngrößen und jeweiliger Bremsbetätigungskenngrößen während des Rangierens durch den Bediener getrennt für jeweilige Anfahrkupplungsbetätigungen und jeweilige Anfahrbremsbetätigungen sowie für jeweilige Anhaltkupplungsbetätigungen und jeweilige Anhaltbremsbetätigungen erfolgt und das Bestimmen der wenigstens einen Kupplungssteuerkennlinie (112) ferner die folgenden Schritte aufweist:
Bestimmen wenigstens einer Anfahrkupplungssteuerkennlinie (222) in Abhängigkeit von den erfassten Kupplungsbetätigungskenngrößen der Anfahrkupplungsbetätigungen und den erfassten Bremsbetätigungskenngrößen der Anfahrbremsbetätigungen; und
Bestimmen wenigstens einer Anhaltkupplungssteuerkennlinie (226) in Abhängigkeit von den erfassten Kupplungsbetätigungskenngrößen der Anhaltkupplungsbetätigungen und den erfassten Bremsbetätigungskenngrößen der Anhaltbremsbetätigung,
wobei mittels der Anfahrkupplungssteuerkennlinie (222) durch den Steuerungsablauf eine Kupplungsbetätigung beim Anfahren in Abhängigkeit von einer Bremsbetätigung eines Bedieners selbsttätig gesteuert wird und wobei mittels der Anhaltkupplungssteuerkennlinie (226) durch den Steuerungsablauf eine Kupplungsbetätigung beim Anhalten in Abhängigkeit von einer Bremsbetätigung eines Bedieners selbsttätig gesteuert wird.

9. Verfahren nach einem der vorhergehenden Ansprüche, wobei das Rangieren mit der Arbeitsmaschine durch den Bediener bei unterschiedlichen Lastfällen der Arbeitsmaschine erfolgt, wobei das Erfassen jeweiliger Kupplungsbetätigungskenngrößen jeweiliger Kupplungsbetätigungen und jeweiliger Bremsbetätigungskenngrößen jeweiliger Bremsbetätigungen während des Rangierens durch den Bediener zugeordnet zu den jeweiligen Lastfällen erfolgt und für jeden Lastfall eine Bestimmung einer zugeordneten Kupplungssteuerkennlinie (110, 112, 114) in Abhängigkeit von den erfassten Kupplungsbetätigungskenngrößen und erfassten Bremsbetätigungskenngrößen des jeweiligen Lastfalls erfolgt, wobei mittels der jeweiligen dem jeweiligen Lastfall zugeordneten Kupplungssteuerkennlinie (110, 112, 114) durch den Steuerungsablauf eine Kupplungsbetätigung in Abhängigkeit von einer Bremsbetätigung entsprechend eines Lastfalls selbsttätig gesteuert wird.

10. Verfahren nach Anspruch 9, wobei das Verfahren ferner die folgenden Schritte aufweist:
Auswahl eines Lastfalls, welcher keinem der Lastfälle während des Rangierens entspricht; und
Berechnen einer dem ausgewählten Lastfall zugeordneten Kupplungssteuerkennlinie (110, 112, 114) in Abhängigkeit von wenigstens zwei unterschiedlichen Lastfällen zugeordneten bestimmten Kupplungssteuerkennlinien, wobei mittels der dem ausgewählten Lastfall zugeordneten Kupplungssteuerkennlinie (110, 112, 114) durch den Steuerungsablauf eine Kupplungsbetätigung in Abhängigkeit von einer Bremsbetätigung eines Bedieners entsprechend des ausgewählten Lastfalls selbsttätig gesteuert wird.

11. Verfahren nach einem der vorhergehenden Ansprüche 1 bis 8, wobei das Verfahren ferner die folgenden Schritte aufweist:
Auswahl eines Lastfalls durch den Bediener; und
Modifizieren einer jeweiligen Kupplungssteuerkennlinie (110, 112, 114) durch einen Betätigungsoffset, wobei mittels der modifizierten Kupplungssteuerkennlinie durch den Steuerungsablauf die Kupplungsbetätigung in Abhängigkeit von der Bremsbetätigung des Bedieners selbsttätig gesteuert wird.

12. Verfahren nach einem der vorhergehenden Ansprüche, wobei die jeweiligen Bremsbetätigungskenngrößen einen Bremsbetätigungsgradienten bezogen auf die Zeit und ein Bremsbetätigungsausmaß aufweist.

13. Arbeitsmaschine mit einem Antriebsstrang, welcher einen Motor (10), eine Bremse (48) und eine Kupplung (18) aufweist, mittels welcher der Motor (10) mit einem Abtrieb wirkverbindbar ist, mit einer Steuervorrichtung (30) und einer Erfassungsvorrichtung, wobei die Erfassungsvorrichtung dazu ausgebildet ist, jeweilige Bremsbetätigungskenngröße der Bremse (48) zu erfassen, und wobei die Steuervorrichtung (30) dazu ausgebildet ist, die Kupplung (18) in Abhängigkeit von der jeweiligen erfassten Bremsbetätigungskenngröße gemäß einer mittels des Verfahrens gemäß einem der vorhergehenden Ansprüche bestimmten Steuerungsablauf zu betätigen.

14. Arbeitsmaschine nach Anspruch 13, wobei die Arbeitsmaschine ferner einen Bremslichtschalter (50) aufweist und die Erfassungsvorrichtung dazu ausgebildet ist, die jeweilige erfasste Bremsbetätigungskenngröße in Abhängigkeit von einem Zustand des Bremslichtschalters (50) zu verifizieren.

## Claims

1. Method for determining a control sequence for a drive train of a work machine, wherein a clutch (18) of the drive train is controlled with the control sequence on the basis of a brake actuation, comprising at least the following steps:
manoeuvring (60) with the work machine by way of an operator;
recording (62) respective clutch actuation characteristic variables of respective clutch actuations and respective brake actuation characteristic variables of respective brake actuations during manoeuvring; and
determining (64) at least one clutch control characteristic curve (110, 112, 114) on the basis of the recorded clutch actuation characteristic variables and the recorded brake actuation characteristic variables, wherein a clutch actuation is automatically controlled by means of the respective clutch control characteristic curve (110, 112, 114) by the control sequence on the basis of a brake actuation by an operator.

2. Method according to Claim 1, wherein the step of determining the clutch control characteristic curve (110, 112, 114) comprises averaging respective recorded clutch actuation characteristic variables and respective recorded brake actuation characteristic variables in a multiplicity of manoeuvring operations.

3. Method according to Claim 1 or 2, wherein at least one first clutch control characteristic curve (110, 112) is determined by the operator in the case of a first selection of respective recorded clutch actuations and respective recorded brake actuations and at least one second clutch control characteristic curve (114) is determined by the operator in the case of a second selection of respective recorded clutch actuations and respective recorded brake actuations that differs from the first selection.

4. Method according to one of the preceding claims, wherein a first brake actuation range (120), in which the brake actuation does not lead to any clutch actuation, is determined for the clutch control characteristic curve (110, 112, 114).

5. Method according to one of the preceding claims, wherein a second brake actuation range (122), in which the brake actuation leads to a corresponding clutch actuation, is determined for the clutch control characteristic curve (110, 112, 114).

6. Method according to Claim 5, wherein the second brake actuation range (122) is divided into a first subrange (124), a second subrange (128) and a third subrange (130), wherein the subranges (124, 128, 130) adjoin each other, and wherein a change in the brake actuation in the second subrange (128) leads to a smaller change in the clutch actuation than an equal change in the brake actuation in the first subrange (122) and the third subrange (130).

7. Method according to one of the preceding Claims 4 to 6, wherein a third brake actuation range (132), in which the brake actuation does not lead to any clutch actuation, is determined for the clutch control characteristic curve (110, 112, 114).

8. Method according to one of the preceding claims, wherein respective clutch actuation characteristic variables and respective brake actuation characteristic variables are recorded, during manoeuvring by the operator, separately for respective starting clutch actuations and respective starting brake actuations as well as for respective stopping clutch actuations and respective stopping brake actuations and the determination of the at least one clutch control characteristic curve (112) further comprises the following steps:
determining at least one starting clutch control characteristic curve (222) on the basis of the recorded clutch actuation characteristic variables of the starting clutch actuations and the recorded brake actuation characteristic variables of the starting brake actuations; and
determining at least one stopping clutch control characteristic curve (226) on the basis of the recorded clutch actuation characteristic variables of the stopping clutch actuations and the recorded brake actuation characteristic variables of the stopping brake actuation, wherein a clutch actuation is automatically controlled by means of the starting clutch control characteristic curve (222) by the control sequence during starting on the basis of a brake actuation by an operator, and wherein a clutch actuation is automatically controlled by means of the stopping clutch control characteristic curve (226) by the control sequence during stopping on the basis of a brake actuation by an operator.

9. Method according to one of the preceding claims, wherein the manoeuvring with the work machine by the operator takes place in different load cases of the work machine, wherein respective clutch actuation characteristic variables of respective clutch actuations and respective brake actuation characteristic variables of respective brake actuations are recorded during manoeuvring by the operator in a manner assigned to the respective load cases and an assigned clutch control characteristic curve (110, 112, 114) is determined for each load case on the basis of the recorded clutch actuation characteristic variables and recorded brake actuation characteristic variables of the respective load case, wherein a clutch actuation is automatically controlled by means of the respective clutch control characteristic curve (110, 112, 114) assigned to the respective load case by the control sequence on the basis of a brake actuation corresponding to a load case.

10. Method according to Claim 9, wherein the method further comprises the following steps:
selecting a load case that does not correspond to any of the load cases during manoeuvring; and
calculating a clutch control characteristic curve (110, 112, 114) assigned to the selected load case on the basis of at least two determined clutch control characteristic curves assigned to different load cases, wherein a clutch actuation is automatically controlled by means of the clutch control characteristic curve (110, 112, 114) assigned to the selected load case by the control sequence on the basis of a brake actuation by an operator corresponding to the selected load case.

11. Method according to one of the preceding Claims 1 to 8, wherein the method further comprises the following steps:
selecting a load case by the operator; and
modifying a respective clutch control characteristic curve (110, 112, 114) by means of an actuation offset, wherein the clutch actuation is automatically controlled by means of the modified clutch control characteristic curve by the control sequence on the basis of the brake actuation by the operator.

12. Method according to one of the preceding claims, wherein the respective brake actuation characteristic variables have a brake actuation gradient relative to the time and a brake actuation extent.

13. Work machine having a drive train, which has a motor (10), a brake (48) and a clutch (18), by means of which the motor (10) can be operatively connected to a driven output, having a control device (30) and a recording device, wherein the recording device is designed to record a respective brake actuation characteristic variable of the brake (48), and wherein the control device (30) is designed to actuate the clutch (18) on the basis of the respective recorded brake actuation characteristic variable according to a control sequence determined by means of the method according to one of the preceding claims.

14. Work machine according to Claim 13, wherein the work machine further comprises a brake light switch (50) and the recording device is designed to verify the respective recorded brake actuation characteristic variable on the basis of a state of the brake light switch (50).

## Revendications

1. Procédé permettant de déterminer une séquence de commande d'une chaîne cinématique d'une machine de travail, la séquence de commande commandant un embrayage (18) de la chaîne cinématique en fonction d'un actionnement de frein, présentant au moins les étapes suivantes consistant à :
manœuvrer (60) la machine de travail par un opérateur ;
détecter (62) des grandeurs caractéristiques d'actionnement d'embrayage respectives d'actionnements d'embrayage respectifs, et des grandeurs caractéristiques d'actionnement de frein respectives d'actionnements de frein respectifs pendant la manœuvre ; et
déterminer (64) au moins une courbe caractéristique de commande d'embrayage (110, 112, 114) en fonction des grandeurs caractéristiques d'actionnement d'embrayage détectées et des grandeurs caractéristiques d'actionnement de frein détectées, dans lequel, au moyen de la courbe caractéristique de commande d'embrayage respective (110, 112, 114), la séquence de commande permet de commander de façon autonome un actionnement d'embrayage en fonction d'un actionnement de frein d'un opérateur.

2. Procédé selon la revendication 1, dans lequel l'étape de détermination de la courbe caractéristique de commande d'embrayage (110, 112, 114) présente un calcul de moyenne de grandeurs caractéristiques d'actionnement d'embrayage détectées respectives et de grandeurs caractéristiques d'actionnement de frein détectées respectives pour une pluralité de processus de manœuvre.

3. Procédé selon la revendication 1 ou 2, dans lequel au moins une première courbe caractéristique de commande d'embrayage (110, 112) est déterminée par l'opérateur lors d'une première sélection d'actionnements d'embrayage détectés respectifs et d'actionnements de frein détectés respectifs, et au moins une deuxième courbe caractéristique de commande d'embrayage (114) est déterminée par l'opérateur lors d'une deuxième sélection, différente de la première sélection, d'actionnements d'embrayage détectés respectifs et d'actionnements de frein détectés respectifs.

4. Procédé selon l'une quelconque des revendications précédentes, dans lequel, pour la courbe caractéristique de commande d'embrayage (110, 112, 114), une première plage d'actionnement de frein (120) est déterminée dans laquelle l'actionnement de frein n'entraîne aucun actionnement d'embrayage.

5. Procédé selon l'une quelconque des revendications précédentes, dans lequel, pour la courbe caractéristique de commande d'embrayage (110, 112, 114), une deuxième plage d'actionnement de frein (122) est déterminée dans laquelle l'actionnement de frein entraîne un actionnement d'embrayage correspondant.

6. Procédé selon la revendication 5, dans lequel la deuxième plage d'actionnement de frein (122) est divisée en une première plage partielle (124), une deuxième plage partielle (128) et une troisième plage partielle (130), dans lequel les plages partielles (124, 128, 130) sont consécutives, et dans lequel un changement de l'actionnement de frein dans la deuxième plage partielle (128) entraîne un changement de l'actionnement d'embrayage inférieur à celui d'un même changement de l'actionnement de frein dans la première (122) et la troisième plage partielle (130).

7. Procédé selon l'une quelconque des revendications 4 à 6, dans lequel, pour la courbe caractéristique de commande d'embrayage (110, 112, 114), une troisième plage d'actionnement de frein (132) est déterminée dans laquelle l'actionnement de frein n'entraîne aucun actionnement d'embrayage.

8. Procédé selon l'une quelconque des revendications précédentes, dans lequel la détection de grandeurs caractéristiques d'actionnement d'embrayage respectives et de grandeurs caractéristiques d'actionnement de frein respectives pendant la manœuvre par l'opérateur est effectuée séparément pour des actionnements d'embrayage de démarrage respectifs et des actionnements de frein de démarrage respectifs, et la détermination de ladite au moins une courbe caractéristique de commande d'embrayage (112) présente en outre les étapes suivantes consistant à :
déterminer au moins une courbe caractéristique de commande d'embrayage de démarrage (222) en fonction des grandeurs caractéristiques d'actionnement d'embrayage détectées des actionnements d'embrayage de démarrage et des grandeurs caractéristiques d'actionnement de frein détectées des actionnements de frein de démarrage ; et
déterminer au moins une courbe caractéristique de commande d'embrayage d'arrêt (226) en fonction des grandeurs caractéristiques d'actionnement d'embrayage détectées des actionnements d'embrayage d'arrêt et des grandeurs caractéristiques d'actionnement de frein détectées de l'actionnement de frein d'arrêt, dans lequel, au moyen de la courbe caractéristique de commande d'embrayage de démarrage (222), la séquence de commande permet de commander de façon autonome un actionnement d'embrayage au démarrage en fonction d'un actionnement de frein d'un opérateur, et dans lequel, au moyen de la courbe caractéristique de commande d'embrayage d'arrêt (226), la séquence de commande permet de commander de façon autonome un actionnement d'embrayage à l'arrêt en fonction d'un actionnement de frein d'un opérateur.

9. Procédé selon l'une quelconque des revendications précédentes, dans lequel la manœuvre avec la machine de travail par l'opérateur est effectuée pour différents cas de charge de la machine de travail, dans lequel la détection de grandeurs caractéristiques d'actionnement d'embrayage respectives d'actionnements d'embrayage respectifs et de grandeurs caractéristiques d'actionnement de frein respectives d'actionnements de frein respectifs est effectuée pendant la manœuvre en étant attribuée par l'opérateur aux cas de charge respectifs, et pour chaque cas de charge, une détermination d'une courbe caractéristique de commande d'embrayage attribuée (110, 112, 114) est effectuée en fonction des grandeurs caractéristiques d'actionnement d'embrayage détectées et des grandeurs caractéristiques d'actionnement de frein détectées du cas de charge respectif, dans lequel, au moyen de la courbe caractéristique de commande d'embrayage respective (110, 112, 114) attribuée au cas de charge respectif, la séquence de commande permet de commander de façon autonome un actionnement d'embrayage en fonction d'un actionnement de frein selon un cas de charge.

10. Procédé selon la revendication 9, dans lequel le procédé présente en outre les étapes suivantes consistant à :
sélectionner un cas de charge qui ne correspond à aucun des cas de charge pendant la manœuvre ; et
calculer une courbe caractéristique de commande d'embrayage (110, 112, 114) attribuée au cas de charge sélectionné en fonction d'au moins deux courbes caractéristiques de commande d'embrayage déterminées, attribuées à différents cas de charge, dans lequel, au moyen de la courbe caractéristique de commande d'embrayage (110, 112, 114) attribuée au cas de charge sélectionné, la séquence de commande permet de commander de façon autonome un actionnement d'embrayage en fonction d'un actionnement de frein d'un opérateur selon le cas de charge sélectionné.

11. Procédé selon l'une quelconque des revendications précédentes 1 à 8, le procédé présentant en outre les étapes suivantes consistant à :
sélectionner un cas de charge par l'opérateur ; et
modifier une courbe caractéristique de commande d'embrayage respective (110, 112, 114) par un décalage d'actionnement, dans lequel, au moyen de la courbe caractéristique de commande d'embrayage modifiée, la séquence de commande permet de commander de façon autonome l'actionnement d'embrayage en fonction de l'actionnement de frein de l'opérateur.

12. Procédé selon l'une quelconque des revendications précédentes, dans lequel les grandeurs caractéristiques d'actionnement de frein présentent un gradient d'actionnement de frein par rapport au temps et à un degré d'actionnement de frein.

13. Machine de travail comprenant une chaîne cinématique qui présente un moteur (10), un frein (48) et un embrayage (18) au moyen duquel le moteur (10) peut être mis en liaison active avec une sortie, un dispositif de commande (30) et un dispositif de détection, dans laquelle le dispositif de détection est réalisé pour détecter la grandeur caractéristique d'actionnement de frein respective du frein (48), et dans laquelle le dispositif de commande (30) est réalisé pour actionner l'embrayage (18) en fonction de la grandeur caractéristique d'actionnement de frein détectée respective selon une séquence de commande déterminée au moyen du procédé selon l'une quelconque des revendications précédentes.

14. Machine de travail selon la revendication 13, la machine de travail présentant en outre un interrupteur de feux de stop (50), et le dispositif de détection étant réalisé pour vérifier la grandeur caractéristique d'actionnement de frein détectée respective en fonction d'un état de l'interrupteur de feux de stop (50).
